# EUROPÄISCHE PATENTANMELDUNG

(11) **EP 0 658 508 A1**
(43) Veröffentlichungstag der Anmeldung: **21.06.1995**
(21) Anmeldenummer: 93120177.6
(22) Anmeldetag: 15.12.1993
(51) Int. Cl.: B66B 5/28

(54) **Puffereinrichtung für Aufzüge**

(71) Anmelder: INVENTIO AG, CH-6052 Hergiswil NW (CH)
(72) Erfinder: Richter, Utz, Masch. Ing., CH-6030 Ebikon (CH); Müller, Wolfgang, Dipl.-Ing., CH-6045 Meggen (CH); De Curtis, Mauro, Dipl.-Ing., CH-6030 Ebikon (CH)

(57) **Zusammenfassung**

Bei dieser erfindungsgemässen Puffereinrichtung für Aufzüge werden energieverzehrende, deformierbare Körper 13 mit Wabenstruktur als Einwegpuffer eingesetzt. Die deformierbaren Körper 13 ersetzen die üblichen Oel- und Federpuffer und werden auf dem Schachtboden 10 in ein Mantelrohr 14 eingesetzt, auf einem Sockel plaziert oder frei aufgestellt. Bei einem Aufprall der Aufzugskabine 1 werden die deformierbaren Körper 13 gestaucht mittels der Druckstempel 12 unterhalb der Aufzugskabine 1 oder mittels anderer Teile der Kabinenkonstruktion, wobei die kinetische Energie einer überfahrenden und aufprallenden Aufzugkabine 1 durch Verformungsarbeit im deformierbaren Körper 13 verzehrt wird. Durch entsprechende Wahl bezüglich Material, Wabentyp, Formgebung und Querschnittsfläche des deformierbaren Körpers 13 können die benötigten reproduzierbaren Kraft-Weg-Kennlinien realisiert werden. Die erfindungsgemässe Puffereinrichtung kann auch für selbstfahrende Aufzüge verwendet werden, indem diese als Kollisionsschutz unterhalb und oberhalb der Kabine je einen energieverzehrenden, deformierbaren Körper 13 montiert haben.

## Beschreibung

Die Erfindung betrifft eine energieverzehrende Puffereinrichtung für Aufzüge zur Verminderung der Verzögerungswerte beim Aufprall durch störungsbedingtes Ueberfahren im Schachtende.

Pufferelemente sind speziell bei Aufzügen wichtige Teile von Sicherheitseinrichtungen und haben die Aufgabe, bei einer allfälligen, durch Störungen bedingten ungebremsten Fahrt in ein Schachtende, die Kabine nicht schlagartig, sondern innerhalb eines kurzen Bremsweges unter bestmöglichem Schutz der Fahrgäste und Schonung des Materials stillzusetzen.

Herkömmlich sind solche Puffereinrichtungen nach dem energieverzehrenden Prinzip meistens als Oelpuffer mit Kolben, Stössel, Zylinder und Feder ausgeführt. Puffereinrichtungen dieser Art sind teure und schwere Maschinenelemente. Die Puffer müssen mehr als doppelt so hoch sein wie der vorgesehene Bremsweg, was bauseits eine weitere Verteuerung durch grössere Schachtlänge bedingt. Ferner ist für eine zuverlässige Funktion dieser Einrichtungen eine ständige Wartung erforderlich.

Die US-Patentschrift Nr. 4,515,248 beschreibt eine Puffereinrichtung, die als energieverzehrendes und deformierbares Pufferelement ausgeführt ist. Das eigentliche Pufferelement ist ein deformierbarer Schaumstoffblock, der in einem deformierbaren, etwa kubischen Blechgehäuse eingebettet und gegen dieses mittels entsprechenden Zwischenlagen hitzeisoliert ist. Das Blechgehäuse hat ferner noch die Aufgabe, den Schaumstoffblock gegen Feuchtigkeit abzudichten. Durch beliebige Formgebung der Aufpralloberfläche kann die Puffereinrichtung der Konstruktion der Kabinenunterseite angepasst werden und können die spezifischen Aufprallkräfte reduziert werden.

Die Puffereinrichtung besteht aus mehreren Teilen, wobei insbesondere das mit eingeformten Rippen versehene Blechgehäuse für eine Einmalfunktion erhebliche Kosten verursacht, insbesondere dann, wenn verschiedene Varianten vorgesehen sind.

Es ist die Aufgabe der vorliegenden Erfindung, eine Puffereinrichtung der eingangs geschilderten Art zu schaffen, welche einfach und kostengünstig und in verschiedenen Varianten realisierbar ist.

Diese Aufgabe wird durch die in den Ansprüchen gekennzeichnete Erfindung gelöst.

Die Vorteile der Erfindung bestehen darin, dass das Pufferelement aus einem einzigen Stück besteht, ein geringes Gewicht aufweist und problemlos ausgewechselt werden kann. Wegen seines geringen Gewichtes und seiner geringen Grösse kann das Pufferelement z.B. auch leicht an der Schachtdecke als Dämpfung bei einem "Fall nach oben" angebracht werden.

Wertvolle Vorteile des deformierbaren Körpers bestehen darin, dass der Verzögerungsverlauf wählbar ist und dass durch problemlose Rezyklierbarkeit und durch Verwendung eines homogenen Werkstoffes gute Umweltverträglichkeit gegeben ist. Bei Verwendung eines Wabenkörpers aus Leichtmetall ist ferner eine hohe Formbeständigkeit des Puffers gegeben. In den Zeichnungen sind Ausführungsbeispiele dargestellt und es zeigen:
- Fig.1: eine Aufzugskabine am unteren Schachtende mit einer ersten Variante der Puffereinrichtung,
- Fig.2: die Draufsicht auf ein Pufferelement im Schutzrohr,
- Fig.3: eine Seitenansicht eines freistehenden Pufferelementes,
- Fig.4: die Draufsicht auf das freistehende Pufferelement,
- Fig.5: eine Aufzugskabine am unteren Schachtende mit einer zweiten Variante der Puffereinrichtung,
- Fig.6: ein prismatisches Pufferelement mit Sockel,
- Fig.7: eine Kombination von prismatischen Pufferelementen auf Sockel,
- Fig.7a/b: Schnell-Montage/Demontage-Einrichtungen,
- Fig.8: ein Strukturmuster der aktiven Pufferelemente,
- Fig.9: ein teilweise beanspruchtes Pufferelement,
- Fig.10: eine Aufzugskabine am unteren Schachtende mit einer dritten Variante der Puffereinrichtung,
- Fig.11: die Draufsicht auf die Pufferelemente der dritten Art Puffereinrichtung und
- Fig.12: zwei Aufzugskabinen mit Puffereinrichtungen einer vierten Variante.

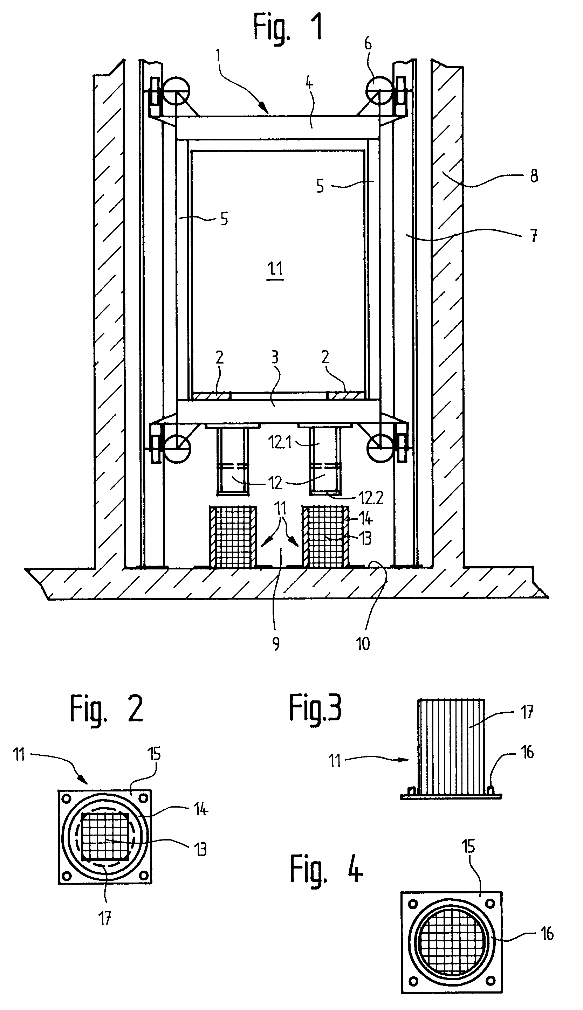

In der Fig.1 zeigt als Aufzugskabine 1 einen Kabinenkörper 1.1 auf Dämpfungselementen 2 in einem Tragrahmen, bestehend aus unterem Joch 3, oberem Joch 4 und Seitenträgern 5. Die Aufzugskabine 1 ist am unteren Joch 3 und am oberen Joch 4 mit Führungsrollen 6 versehen, welche auf Führungen 7 laufen. Der Aufzugsschacht wird aus Schachtwänden 8 und Schachtboden 10 gebildet. Das untere Schachtende, also die Schachtgrube ist mit 9 bezeichnet. Die Puffereinrichtung der ersten Variante besteht aus Druckstempeln 12 und Pufferelementen 11. Die Druckstempel 12 sind am unteren Joch 3 befestigte, vertikal nach unten gerichtete Doppel-T-Profile 12.1 mit einer an der unteren Stirnseite angeschweissten Druckplatte 12.2. Auf dem Schachtboden 10 sind die Pufferelemente 11, bestehend aus einem Mantelrohr 14 als passives Schutzgehäuse und einem, im Mantelrohr 14 befindlichen deformierbaren Körper 13. Das Mantelrohr dient als Schutz vor unbeabsichtigter Beschädigung z.B. durch Wartungspersonal und hat keine Pufferfunktion. Beim Ueberfahren der untersten Haltestelle tauchen die Druckstempel 12 in das Mantelrohr 14 ein und drücken unter entsprechendem Energieverzehr die deformierbaren Körper 13 zusammen. Die gestrichelten waagrechten Linien in den Doppel-T-Profilen der Druckstempel 12 deuten eine kürzere Länge an, wenn ein anderer deformierbarer Körper, beispielsweise gemäss Fig.3 verwendet wird.

Die Fig.2 zeigt weitere Einzelheiten des Puffers 11. Das Mantelrohr 14 ist auf einer mit Befestigungslöchern versehenen Grundplatte 15 vertikal stehend angeschweisst. Im Mantelrohr 14 befindet sich ein lose hineingestellter, deformierbarer, prismatischer Körper 13. Der deformierbare, prismatische Körper 13 weist von allen seinen Seiten und Kanten zum Mantelrohr 14 hin einen gewissen Zwischenraum auf, der so gross bemessen ist, dass der bei einer Ueberfahrt deformierte, prismatische Körper 13 problemlos aus dem Mantelrohr 14 entfernt werden kann. Das gleich gilt auch für einen zylindrischen, deformierbaren Körper 17, angedeutet mit einem gestricheltem Kreis innerhalb des Mantelrohres 14.

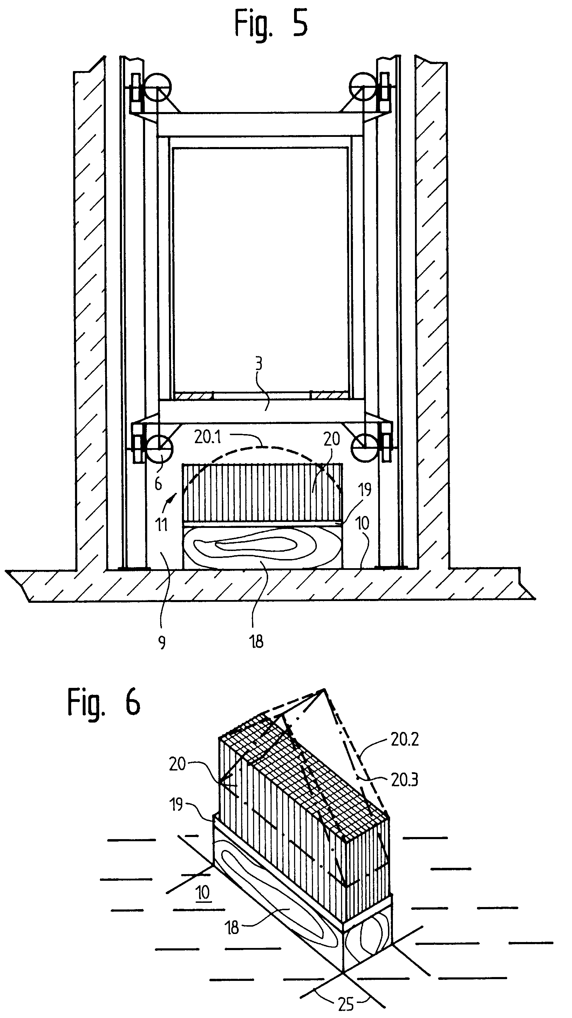

Ein zylindrischer, deformierbarer Körper 17 ist mit Fig.3 und Fig.4 dargestellt. Auf der Grundplatte 15 ist ein niedriger, beispielsweise ca 2 cm hoher Zentrierring 16 aufgeschweisst. Der zylindrische deformierbare Körper 17 ist ohne weitere Befestigung auf die Kreisfläche innerhalb des Zentrierringes 16 gestellt. Der zylindrische, deformierbare Körper 17 weist eine Höhe auf, welche kleiner ist als die kritische Knicklänge, jedoch etwa das vier- bis fünffache des Durchmessers betragen kann. Der zylindrische, deformierbare Körper 17 ist von einem leichten Mantelblech, beschaffen aus dem gleichen Material für die Zellstruktur, umschlossen als Schutz und Bestandteil der deformierbaren Struktur. Die Stirnfläche oben ist im abgedeckten Zustand gezeigt, wird aber in der Praxis mit einer nicht dargestellten Deckschicht als Schutz gegen eindringenden Schmutz abgedeckt. Das Mantelrohr 14 ist vorzugsweise aufklappbar, damit ein gestauchter Pufferkörper 13, 17 leicht entnommen werden kann.

Die zweite Variante der Puffereinrichtung gemäss Fig.5 zeigt einen auf dem Schachtboden 10 aufgelegten Holzsockel 18 mit einem auf seiner Oberseite befestigten, etwa 2cm hohem Zentrierrahmen 19 innerhalb welchem ein länglicher, rechteckiger und deformierbarer Körper 20 eingelegt ist. Die Puffereinrichtung ist so dimensioniert und plaziert, dass die Unterseite des unteren Joches 3 bei einer Ueberfahrt nach unten die ganze obere Stirnfläche des deformierbaren Körpers überdeckt. Die gestrichelte, bogenförmige Linie 20.1 deutet eine weitere mögliche Form des deformierbaren Körpers 20 an. Dadurch wird die Verzögerungsspitze beim Auftreffen der Kabine auf den Puffer vermindert und der Aufprall gedämpft. Die Höhe des Holzsockels 18 ist etwas grösser als die nach unten überragenden Führungsrollen 6, so dass bei einer fehlerhaften Ueberfahrt nach unten nach dem Zusammenstauchen des deformierbaren Körpers 20 noch keine Bodenberührung der Führungsrollen 6 stattfindet. Ein weiterer und sehr wichtiger Grund besteht darin, dass bei zusammengestauchtem, deformierbarem Körper 13,17,20 noch etwas Raum zwischen der Unterseite der Aufzugskabine 1 und dem Schachtboden 10 verbleibt, damit eine gegebenenfalls in der Schachtgrube 9 sich befindliche Person nicht erdrückt wird.

Die perspektivische Darstellung der Puffereinrichtung in der Fig.6 zeigt die ganze Form des deformierbaren Elementes 20. Mit gestrichelten und strichpunktierten Linien 20.2/20.3 sind zwei weitere mögliche Formen des deformierbaren Körpers 20 angedeutet. Der Sockel 18 ist auf dem Schachtboden 10 aufgelegt und seine Position mit Markierungen 25 festgelegt, sofern nicht eine permanente Befestigung am Schachtboden 10 vorgeschrieben ist. Für höhere Ansprüche kann ein gemauerter Sockel 18 vorgesehen werden. Aus dem gleichen Grunde wie bereits erwähnt ist auch bei dieser Variante der Puffereinrichtung eine Schutzabdeckung der oberen Stirnseiten des deformierbaren Körpers 20 vorgesehen.

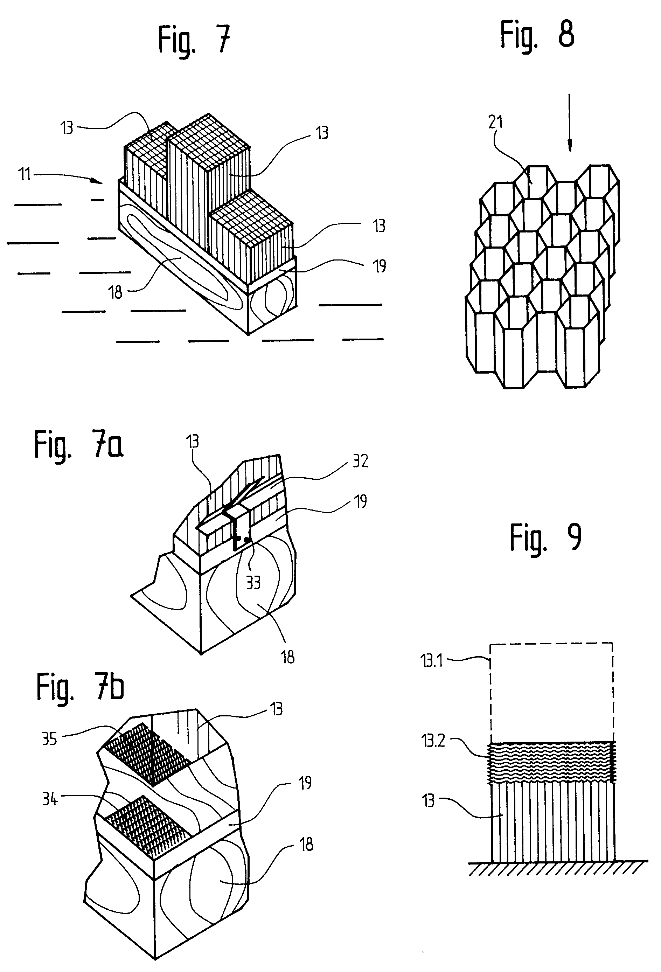

Die Fig.7 zeigt eine Kombination prismatischer, deformierbarer Körper 13 verschiedener Höhen, so dass sich die Form einer einfachen Stufenpyramide ergibt. Auch hiermit lässt sich der Verzögerungsverlauf so wählen, dass der Ruck in der Kabine möglichst sanft verläuft um Verletzungen von in der Kabine befindlichen Personen zu verhindern.

Die Fig.7a und 7b zeigen Einzelheiten von Schnellmontage/demontage-Einrichtungen. In der Fig.7a weist der deformierbare Körper 13 im unteren Teil an den Schmalseiten nahe am Zentrierrahmen 19 eine über die ganze Schmalseite sich erstreckende Kerbe 32 auf. Mit 33 ist eine am Zentrierrahmen 19 befestigte Schnappfeder bezeichnet, welche bei eingesetztem deformierbaren Körper 13 in dessen Kerbe 32 einrastet und diesen festhält. Am Zentrierrahmen 19 sind beispielsweise je zwei solche Schnappfedern 33 an den Schmalseiten angeordnet, wobei die entsprechenden Seiten des deformierbaren Körpers 13 die Kerben 32 aufweisen.

Die Schnellmontage/demontage gemäss Fig.7b erfolgt mittels Klettenverschluss-Stücken 34 und 35, welche beispielsweise in den vier Eckenbereichen der Auflagefläche des Sockels 18 sowie an den gegenüberliegenden vier Eckenbereichen an der Unterseite des deformierbaren Körpers 13 angebracht sind.

In der Fig.8 ist die innere Struktur der deformierbaren Körper 13, 17 und 20 als ein Wabenmuster 21 dargestellt. Die deformierbaren Körper werden mit einer parallel zu den Zellwänden gerichteten Kraft gestaucht und so die Zellwände stirnseitig bis zur bleibenden Deformation auf Knickung beansprucht. Die Kraftrichtung ist in der Fig.8 mit einem Pfeil angedeutet. Die Zellwände stehen in Richtung der aufzunehmenden Kraft, bei der hier beschriebenen Anwendung also senkrecht.

In der Fig.9 ist ein teilweise gestauchter, deformierbarer Körper 13 dargestellt. Der gestrichelte Umriss 13.1 zeigt die ursprüngliche Form des deformierbaren Körpers 13 vor der Stauchung und der Teil 13.2 die zusammengestauchte Partie.

Die Stauchung erfolgt kontinuierlich von oben nach unten, indem fortwährend kurze Partien der vertikalen Wabenwände geknickt und in die Horizontale zusammengefaltet werden, wodurch sich die horizontale Querschnittsfläche in der gestauchten Partie etwas vergrössert.

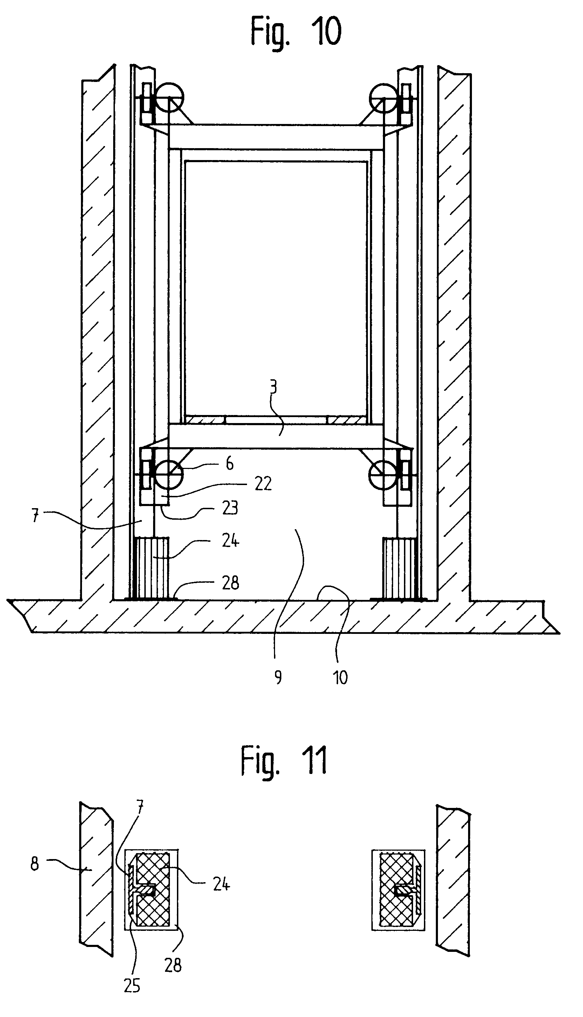

In der Fig.10 ist eine dritte Variante der Puffereinrichtung dargestellt. Die Führungsrollen 6 befinden sich in einem stabilen Rollengehäuse 22, das an seiner Unterseite mit einer Druckplatte 23 abgeschlossen ist. Die Druckplatte 23 trifft bei einer Ueberfahrt nach unten auf die obere Stirnseite eines um die Führungsschiene 7 gelegten deformierbaren Körpers 24.

Aus Fig.11 ist die Querschnittsform des deformierbaren Körpers 24 ersichtlich. Die mit einem Einschnitt versehenen deformierbaren Körper 24 sind, den Führungsschenkel der Führungsschiene 7 umschliessend, lose oder mit einem Befestigungsmittel 25 beispielsweise Draht, Schnur oder Kabelbinder gesichert an den Führungsschienen 7 plaziert und auf den Schachtboden 10 auf eine Grundplatte 28 gestellt. In angepasster Ausführung ist auch eine Schnellmontage/demontage-Einrichtung anwendbar wie bereits in den Fig.7a/b dagestellt.

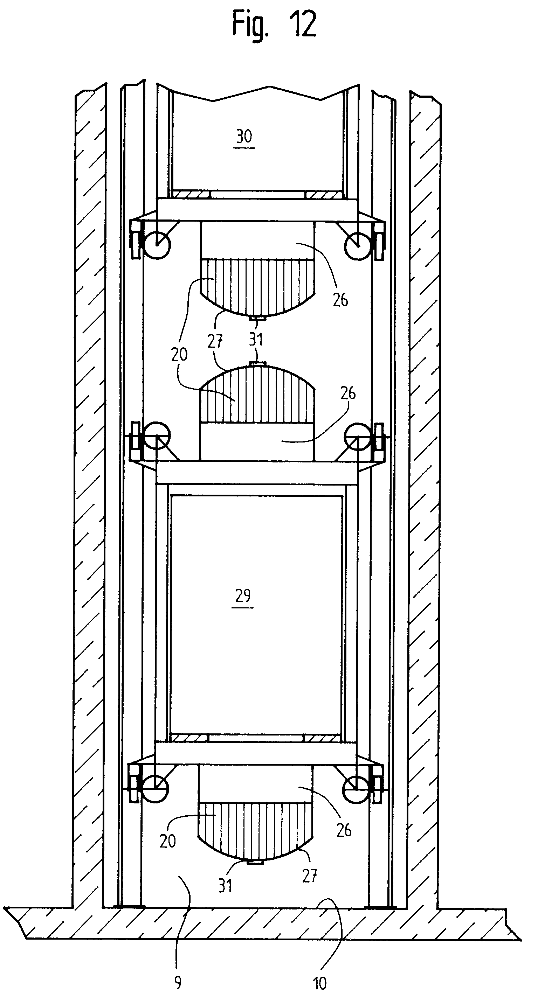

Die Fig.12 zeigt eine vierte Variante von Puffereinrichtungen, bei welcher Pufferelemente und Sockelelemente unterhalb und oberhalb von selbstfahrenden Aufzugskabinen 29 und 30 angeordnet sind. Die Aufzugskabinen 29 und 30 sind Bestandteil einer Aufzugsanlage, bei welcher mehrere mit einem Eigenantrieb versehene, seillose Kabinen im gleichen Schacht verkehren. Ein durch einen Steuerungsfehler möglicher Zusammenprall von zwei Aufzugskabinen 29 und 30 wird durch die gezeigte Puffereinrichtung abgeschwächt und verhindert Verletzungen von Fahrgästen sowie Materialschäden. Als Sockelelement dient je ein stabiler Kasten 26, der gleichzeitig als Gehäuse für Antriebs- und Apparate-Einrichtungen der selbstfahrenden Aufzugskabinen 29 und 30 dient. Die deformierbaren, länglichen und auf der Oberseite gerundeten Körper 20 sind, aus bereits erwähnten Gründen, an der sonst offenen Stirnseite mit einer Abdeckung 27 versehen und werden beispielsweise mit einer leicht lösbaren Haft- oder Rastverbindung auf ihrer Unterlage festgehalten. Mit 31 ist ein an oberster Stelle angebrachtes Schaltelement bezeichnet, dessen Wirkungsweise später noch erläutert wird.

Diese Wabenstrukturelemente werden, je nach Verwendungszweck, aus Metallen, Kunststoffen, Papierarten (Karton) oder Verbundwerkstoffen hergestellt. Mittels Werkstoffwahl, Typenwahl, Formgebung und Wahl des Querschnittes können die gewünschten Kraft-Weg-Kennlinien reproduzierbar vorbestimmt werden. Auf diese Möglichkeit wird mit den verschiedenen angedeuteten Formen in den Zeichnungen hingewiesen. Anstelle einer Variation der "äusseren" Form, kann der Kraft-Weg-Verlauf auch durch Ausschneiden eines Teils des Wabenkörpers oder Anbringen von Löchern beeinflusst werden. Für Puffereinrichtungen beim Aufzugsbau kommen für höhere Ansprüche insbesondere Elemente aus Alluminium in Frage. Für sehr preiswerte Lösungen sind auch Elemente aus Karton zu berücksichtigen, wobei diese als Feuchteschutz imprägniert oder beschichtet sind oder einen Folienüberzug erhalten. Pufferelemente der beschriebenen Art sind sehr leicht an Gewicht und auch einfach auszuwechseln nach einer Beanspruchung. Pro Anlage können einige zusätzliche Elemente bei der Anlage als Vorrat gehalten werden. Verbrauchte, also gestauchte Elemente sind kostengünstig und problemlos rezyklier- oder verbrennbar, da sie homogen aus nur einem Werkstoff bestehen und keine fremden Teile und Armaturen aufweisen. Nach einer Fehlfahrt auf die Puffereinrichtung wird der entsprechende Aufzug nach Fehlerbehebung durch Fachpersonal wieder in Betrieb genommen. Mit der Fehlerbehebung wird gleichzeitig das gestauchte Pufferelement entfernt und durch einen neuen deformierbaren Körper 13,17,20 oder 24 ersetzt.

In einer weiteren Verwendungsart ist für die Puffereinrichtung auch eine Kombination mit Oel- oder Federpuffern möglich. Bei einer solchen Anwendung würde das deformierbare Element beispielsweise als Sockel für einen Oel- oder Federpuffer ausgebildet und hätte die Aufgabe als Sekundärelement zu erfüllen, das erst nach vollständigem Zusammendrücken des als Primärelement gedachten Oel- oder Federpuffer in Funktion tritt. Das deformierbare Element würde dann so konfiguriert, dass eine deformierende Beanspruchung nur dann stattfindet, wenn mit voller Nenngeschwindigkeit auf die Puffereinrichtung gefahren wird. Natürlich wird mit entsprechenden steuerungsbedingten Wegmesseinrichtungen signalisiert, welche Teile der Puffereinrichtung bei einem fehlerhaften Ueberfahren beansprucht wurden, um über ein allfällig nötiges Auswechseln eines deformierten Elementes informiert zu sein.

Bei der vierten Variante der Puffereinrichtung mit den selbstfahrenden Aufzugskabinen 29 und 30 signalisiert das an oberster Stelle des deformierbaren Elementes 20 plazierte Schaltelement 31 eine allfällige Kollision zwischen zwei Kabinen. Bei einer Kollision wird der im Schaltelement 31 befindliche elektrische Kontakt betätigt, was ein Stillsetzen der Aufzugsanlage bzw. der beiden Aufzugskabinen 29 und 30 bewirkt. Als Schaltelement 31 kann beispielsweise ein einfacher Folienkontakt auf die Oberfläche des deformierbaren Elementes 20 geklebt und elektrisch in den Sicherheitskreis eingebunden werden. Das Schaltelement 31 kann sinngemäss auch bei den Varianten eins bis drei Anwendung finden.

Die erfindungsgemässe Einrichtung ist auch für die Aufpralldämpfung der Gegengewichte einsetzbar.

Als Zellstruktur für die deformierbaren Körper wird vorzugsweise jene der sechseckigen Honigwaben gewählt. Es sind jedoch weitere Zellformen ebenfalls für diesen Zweck einsetzbar. Die Zellen können rund, oval, dreieckig, quadratisch, rechteckig, polygonförmig, untereinander ungleichförmig, beliebig willkürlich geformt oder bei homogener Zellform ungleich gross untereinander ausgebildet sein. Ferner kann die Ausrichtung der Zellen zur Unterlage des deformierbaren Körpers vertikal, horizontal oder schräg sein. Die Zellwände können auch kreuzweise überlagert sein.

Nicht senkrechte Anordnungen der Zellwände zur Unterlage bzw. eine zu den Zellwänden nicht-parallele Kraftrichtung reduzieren das Energieaufnahmevermögen entsprechend.

Die vorhergehend erwähnte Haftverbindung eines deformierbaren Körpers 13,17,20,24 mit seiner Unterlage 10,18 wird mittels den am deformierbaren Körper 13,17,20,24 und an der Auflage angebrachten Klettenverschluss-Stücken 34,35 ausgeführt. Als Rastverbindung mit der Unterlage 18 dienen beispielsweise am Zentrierrahmen 19 befestigte, senkrechte Schnappfedern 33, welche in seitliche Kerben 32 am deformierbaren Körper 13,17,20,24 einrasten. Beide Verbindungstechniken ergeben eine ausreichende Haltekraft, um den leichtgewichtigen deformierbaren Körper 13,17,20,24 auch hängend an einer Unterlage zu befestigen. Eine hängende Befestigung findet statt, wenn der deformierbare Körper unten an einer Kabine 1,29,30 oder an der Decke im Schachtkopf angeordnet werden soll.

## Patentansprüche

1. Energieverzehrende Puffereinrichtung für Aufzüge zur Verminderung der Verzögerungswerte bei einem störungsbedingten Aufprall mit mindestens einem Pufferelement (11), das als deformierbarer Körper (13,17,20,24) ausgebildet ist, dadurch gekennzeichnet, dass der deformierbare Körper (13,17,20,24) eine Zellstruktur mit vorzugsweise bienenwabenartiger Zellform und mit im wesentlichen parallel zur einwirkenden Kraft stehenden Zellen aufweist.

2. Puffereinrichtung nach Anspruch 1, dadurch gekennzeichnet, dass der deformierbare Körper aus einem einzigen, vorzugsweise rezyklierbaren Werkstoff wie Pappe, Leichtmetall oder Kunststoff besteht.

3. Puffereinrichtung nach Anspruch 1, dadurch gekennzeichnet, dass der deformierbare Körper (13,17,20,24) eine den gewünschten Kraft-Weg-Verlauf bestimmende äussere Form z.B. Prismaform (13,17), Giebelform (20), Halbrundform (20) oder Stufenpyramidenform (13,20) aufweist.

4. Puffereinrichtung nach einem der vorhergehenden Ansprüche, dadurch gekennzeichnet, dass der deformierbare Körper (13,17,20,24) mit einer lösbaren Haft- oder Rastverbindung an seiner Unterlage befestigt ist.

5. Puffereinrichtung nach einem der vorhergehenden Ansprüche, dadurch gekennzeichnet, dass der deformierbare Körper (24) an der Führungsschiene (7) angeordnet ist.

6. Puffereinrichtung nach einem der vorhergehenden Ansprüche, dadurch gekennzeichnet, dass der deformierbare Körper (13,17) von einem vorzugsweise rohrförmigen Schutzgehäuse umgeben ist.

7. Puffereinrichtung nach einem der vorhergehenden Ansprüche, dadurch gekennzeichnet, dass die deformierbaren Körper (13,17,20) oberhalb und/oder unterhalb an Aufzugskabinen (1,29,30) angeordnet sind.

8. Puffereinrichtung nach einem der vorhergehenden Ansprüche, dadurch gekennzeichnet, dass die deformierbaren Körper (13,17,20,24) im Schachtkopf angeordnet sind.

9. Puffereinrichtung nach einem der vorhergehenden Ansprüche, dadurch gekennzeichnet, dass der deformierbare Körper (13,17,20,24) auf der Aufprallfläche einen Schaltkontakt (31) aufweist.

10. Puffereinrichtung nach einem der vorhergehenden Ansprüche, dadurch gekennzeichnet, dass der deformierbare Körper (13,17,20,24) als Sekundärteil eines den Primärteil bildenden Oel- oder Federpuffers vorhanden ist und so ausgebildet ist, dass eine Verformung erst nach voll beanspruchtem Primärteil eintritt.
